# EUROPEAN PATENT APPLICATION

(11) **EP 2 650 181 A1**
(43) Date of publication of application: **16.10.2013**
(21) Application number: 10860445.5
(22) Date of filing: 09.12.2010
(51) Int. Cl.: B60R 25/10, B60R 25/04, B60R 25/00

(54) **CODE LOCK SYSTEM FOR PREVENTING THEFT AND METHOD THEREOF**

(71) Applicant: Volvo Construction Equipment AB, 631 85 Eskilstuna (SE)
(72) Inventor: LEE, Eun-Byeol, Changwon-si Gyeongsangnam-do 642-370 (KR)
(74) Representative: Epping - Hermann - Fischer
(86) International application number: PCT/KR2010/008784
(87) International publication number: WO 2012/077841

(57) **Abstract**

An anti-theft code lock control system including an engine state determination unit, an off time determination unit, a code input unit, a code matching determination unit, and an engine control unit, and a method thereof are provided, which can solve problems of a system in the prior art that determines an equipment off state only by a key signal and thus does not operate a code lock system in the case where a key is in an on state but an engine is in the same state as an engine off state.

## Description

### TECHNICAL FIELD

The present invention relates to an anti-theft code lock control system and a method thereof. More particularly, the present invention relates to an anti-theft code lock control system and a method thereof, which can solve problems of a system in the prior art, which determines an equipment off state only by a key signal in the case where a key is in an on state but an engine is in the same state as an off state, and thus does not operate a code lock system.

### BACKGROUND ART

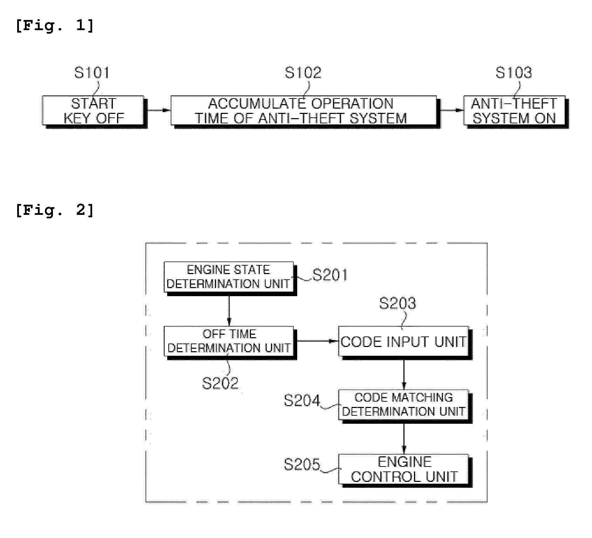

As illustrated in Fig. 1, an anti-theft code lock system in the prior art is a system which can display a code input window when a key of equipment is turned on and start an engine when a code input by an operator matches a code stored in an ECU. If the codes do not match each other, the system performs lock function to prevent the engine from starting. Further, in consideration of operator's inconvenience in inputting a code whenever the key is turned on, the code input window may not be displayed when the operator turns on the key within a predetermined time designated by the operator after a key off operation, and in this case, the code lock function is not applied. In displaying the code input window, a period of time from a time point where the start key is turned off to a time point where a start key is turned on is calculated, and the input window is displayed so that the operator can input the code after the predetermined time designated by the operator elapses.

On the other hand, an auto engine shutdown system in the prior art operates in a manner that if a predetermined time elapses in a state where an operator does not operate the equipment of which the engine has started, the ECU automatically makes engine shutdown request to make the same state as the start off state.

If the code lock function and the auto engine shutdown function are simultaneously applied to the equipment, the code lock system may not properly operate. That is, the code lock system calculates the period of time from the time point where the start key is turned off to the time point where the start key is turned on, and displays the code input window after the predetermined time designated by the operator elapses. However, if the auto engine shutdown function is performed in the case where the key is in the on state but the engine is in the same state as the off state, the code lock system is unable to recognize the equipment off state since the key is in the on state, and thus does not display the code input window when the engine of the equipment starts again after the predetermined time elapses.

That is, if the engine starts again in a state where the engine of the equipment, to which the code lock system and the auto engine shutdown system are simultaneously applied, is turned off by the auto engine shutdown system, the code input window is not displayed, but the engine starts immediately. In summary, in displaying the code input window, the equipment off state is determined only by the key input, and thus in the case where the equipment is turned off regardless of the key state, the code lock system does not operate.

### DISCLOSURE

### TECHNICAL PROBLEM

Therefore, the present invention has been made to solve the above-mentioned problems occurring in the prior art, and the subject to be solved by the present invention is to provide an anti-theft code lock control system and a method thereof, which can prevent any person except for an operator from starting an engine and thus prevent thief through recognizing a signal that indicates an engine off in addition to a start key and displaying a code input window when equipment is turned on after a predetermined time elapses from the recognition of the signal.

### TECHNICAL SOLUTION

In accordance with one aspect of the present invention, there is provided an anti-theft code lock control system, which includes an engine state determination unit determining whether an engine is currently in an off state; an off time determination unit counting a period of time from time when the engine is turned off to time when a start key is turned on if the engine is turned off as the result of the determination, and determining to apply a code lock system if the counted time exceeds a user set time; a code input unit displaying a code input window to receive an input of a code in accordance with the result of the determination by the off time determination unit; a code matching determination unit determining whether the input code is identical to a code stored in an ECU; and an engine control unit shutting down or running the engine in accordance with the result of the code matching determination.

Preferably, a signal for determining whether the engine is currently in the off state may be one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.

In accordance with another aspect of the present invention, there is provided a method of controlling anti-theft code lock, which includes determining whether an engine is currently in an off state; counting a period of time from time when the engine is turned off to time when a start key is turned on if the engine is turned off as the result of the determination, and determining to apply a code lock system if the counted time exceeds a user set time; displaying a code input window to receive an input of a code in accordance with the result of the determination; determining whether the input code is identical to a code stored in an ECU; and shutting down or running the engine in accordance with the result of the code matching determination.

Preferably, a signal for determining whether the engine is currently in the off state may be one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.

### ADVANTAGEOUS EFFECT

The present invention relates to a system which turns on the anti-theft system that is used in the construction machine, such as an excavator, and can solve the problem of the existing anti-theft system that is turned on/off only by the start key condition. That is, in the case where a control system that automatically turns off the engine, such as an auto engine shutdown system, is applied, the system receives the signal for determining the start stop conditions regardless of the start key conditions, calculates time from the time point where the equipment stop state is recognized, and then displays the code input window to turn on the anti-theft system if the equipment is turned on after the predetermined time designated by the operator elapses. Accordingly, any person except for the operator can be prevented from starting the engine.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of an anti-theft control system in the prior art;
Fig. 2 is a block diagram illustrating the configuration of an anti-theft code lock control system according to an embodiment of the present invention; and
Fig. 3 is a flowchart sequentially illustrating the operation of an anti-theft code lock control system according to an embodiment of the present invention.

### * Description of Reference Numerals in the Drawing

201: engine state determination unit
202: off time determination unit
203: code input unit
204: code matching determination unit
205: engine control unit

### BEST MODE

Fig. 2 is a block diagram illustrating the construction of an anti-theft code lock control system according to an embodiment of the present invention.

As illustrated in Fig. 2, the control system according to an embodiment of the present invention is configured to include an engine state determination unit 201, an off time determination unit 202, a code input unit 203, a code matching determination unit 204, and an engine control unit 205.

That is, the control system according to an embodiment of the present invention is configured to include the engine state determination unit 201 determining whether an engine is currently in an off state; the off time determination unit 202 counting a period of time from time when the engine is turned off to time when a start key is turned on if the engine is turned off as the result of the determination, and determining to apply a code lock system if the counted time exceeds a user set time; the code input unit 203 displaying a code input window to receive an input of a code in accordance with the result of the determination by the off time determination unit 202; the code matching determination unit 204 determining whether the input code is identical to a code stored in an ECU; and the engine control unit 205 shutting down or running the engine in accordance with the result of the code matching determination.

Here, the engine state determination unit 201 determines whether the engine is currently in the off state. Specifically, the engine state determination unit 201 sets a condition on which it is possible to determine that the engine is currently turned off, and recognizes that the engine is turned off in accordance with the set condition. A signal for determining whether the engine is currently in the off state may be one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.

If the engine is turned off as the result of the determination by the engine state determination unit 201, the off time determination unit 202 counts a period of time from the time when the engine is turned off to the time when the start key is turned on, and determines to apply the code lock system if the counted time exceeds the user set time. That is, if the signal indicating that the equipment is stopped is received in addition to the start key off signal, the off time determination unit 202 starts calculation of the time for displaying the code input window, and through this signal, the off time determination unit 202 can recognize that the equipment, to which a control system that automatically turns off the engine, such as an auto engine shutdown system, is applied, is in an off state even if the start key is in an on state. This state is recognized, and if an operator turns on the equipment again after a predetermined time designated by the operator elapses, the code input window is displayed. In this case, if an input code does not match a code stored in an ECU (not illustrated), the start of the equipment is locked to prevent theft.

If the counted time from the engine off time to the start key on time exceeds the predetermined user set time for displaying the code input window as the result of the determination by the off time determination unit 202, the code input unit 203 displays the code input window to receive an input of a specific code in accordance with the user's key operation.

The code matching determination unit 204 determines whether the code input from the code input unit 203 is identical to the code stored in the ECU (not illustrated), and if the two codes are not identical to each other as the result of the determination, i.e., if the input code is illegal and is in danger of identity theft, the engine control unit 205 shuts down the engine, whereas if the two codes are identical to each other, i.e., if it is determined that the code is legally used, the engine control unit 205 runs the engine.

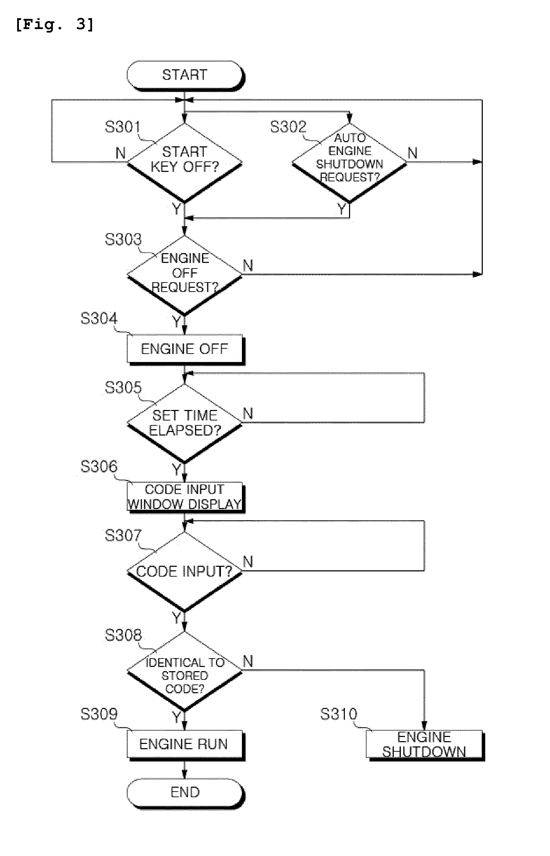

Hereinafter, the operation of the anti-theft code lock control system according to the present invention in Fig. 2 will be described with reference to Fig. 3.

Fig. 3 is a flowchart sequentially illustrating the operation of an anti-theft code lock control system according to an embodiment of the present invention.

As illustrated in Fig. 3, it is first determined whether the engine is currently in the off state in accordance with the start key and existence/nonexistence of an engine off request signal that is generated according to an input of the auto engine shutdown request signal (S301 to S303).

A signal for determining whether the engine is currently in the off state may be one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.

Next, if the engine is turned off (S304) as the result of the determination, a period of time from the time when the engine is turned off to the time when the start key is turned on is counted, and the counted time and a predetermined user set time are compared with each other (S305).

If the counted time exceeds the user set time as the result of the comparison, i.e., if the period of time from the time when the engine is turned off to the time when the start key is turned on exceeds the user set time for displaying the code input window, it is determined whether to apply the code lock system.

Next, if the counted time from the time when the engine is turned off to the time when the start key is turned on exceeds the user set time for displaying the code input window, the code input window is displayed (S306) to receive an input of the specific code in accordance with the user's key operation (S307).

Next, it is determined whether the input code is identical to the code stored in the ECU (S308).

If the two codes are not identical to each other as the result of the determination, i.e., if the input code is illegal and is in danger of identity theft, the engine is shut down, whereas if the two codes are identical to each other, i.e., if it is determined that the code is legally used, the engine is made to run (S309 to S310).

As described above, if the signal indicating that the equipment is stopped is received in addition to the start key off signal, calculation of the time for displaying the code input window starts, and through this signal, it can be recognized that the equipment, to which the auto engine shutdown system is applied, is in the off state even if the start key is in the on state.

This state is recognized, and if the operator turns on the equipment again after the predetermined time designated by the operator elapses, the code input window is displayed. In this case, if the input code does not match the code stored in the ECU, the start of the equipment is locked to prevent theft.

### INDUSTRIAL APPLICABILITY

The present invention can be used in the anti-theft code lock control system. More specifically, the present invention can be used in the anti-theft code lock control system capable of solving the problems of the system in the prior art, which determines the equipment off state only by the key signal in the case where the key is in the on state but the engine is in the same state as the off state, and thus does not operate the code lock system.

## Claims

1. An anti-theft code lock control system comprising:
an engine state determination unit determining whether an engine is currently in an off state;
an off time determination unit counting a period of time from time when the engine is turned off to time when a start key is turned on if the engine is turned off as the result of the determination, and determining to apply a code lock system if the counted time exceeds a user set time;
a code input unit displaying a code input window to receive an input of a code in accordance with the result of the determination by the off time determination unit;
a code matching determination unit determining whether the input code is identical to a code stored in an ECU; and
an engine control unit shutting down or running the engine in accordance with the result of the code matching determination.

2. The anti-theft code lock control system according to claim 1, wherein a signal for determining whether the engine is currently in the off state is one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.

3. A method of controlling anti-theft code lock comprising:
determining whether an engine is currently in an off state;
counting a period of time from time when the engine is turned off to time when a start key is turned on if the engine is turned off as the result of the determination, and determining to apply a code lock system if the counted time exceeds a user set time;
displaying a code input window to receive an input of a code in accordance with the result of the determination;
determining whether the input code is identical to a code stored in an ECU; and
shutting down or running the engine in accordance with the result of the code matching determination.

4. The method of controlling anti-theft code lock according to claim 3, wherein a signal for determining whether the engine is currently in the off state is one selected from an off signal of the start key, a communication signal that a controller except for the engine transmits to the engine to turn off the engine, a communication signal through which an engine controller notifies that the engine is turned off, a communication signal through which the engine controller turns off the engine, an electric signal for turning off the engine, and a control system on signal for automatically turning off the engine.
